# EUROPÄISCHE PATENTSCHRIFT

(11) **EP 2 765 442 B1**
(45) Veröffentlichungstag und Bekanntmachung des Hinweises auf die Patenterteilung: **21.09.2016**
(21) Anmeldenummer: 14150550.3
(22) Anmeldetag: 09.01.2014
(51) Int. Cl.: G01V 8/20

(54) **Lichtgitter**
Light grid
Grille de lumière

(30) Priorität: 07.02.2013 DE 102013101203
(43) Veröffentlichungstag der Anmeldung: 13.08.2014
(73) Patentinhaber: SICK AG, 79183 Waldkirch (DE)
(72) Erfinder: Häringer, Helmut, 79215 Elzach (DE)
(74) Vertreter: Ludewigt, Christoph

(56) Entgegenhaltungen:
- EP-A2- 1 396 734
- DE-U1-202005 003 051
- JP-A- 2009 150 951
- US-A- 4 628 731
- US-A- 5 095 327
- US-A- 5 528 934
- US-A- 5 851 631
- US-A1- 2008 253 756
- US-A1- 2010 067 898
- US-B1- 6 507 700

## Beschreibung

Die Erfindung betrifft ein Lichtgitter nach dem Oberbegriff von Anspruch 1.

Der Begriff Sensor ist breit auszulegen und umfasst alle Arten von Sensoren. Bei einem Sensor kann es sich beispielsweise um ein Sicherheitslichtgitter für den Unfallschutz oder ein Lichtgitter für die Automatisierungstechnik handeln. Weiter kann es sich bei einem Sensor um einen Zeilensensor, einen Kontrastsensor, einen Kontrasttaster, eine Lichtschranke, einen Lichttaster, eine Kamera, um ein Vision System, bzw. Kamera System, einen Barcodeleser oder eine andere Art von Sensor handeln.

Derartige Sensoren, insbesondere optoelektronische Sensoren, insbesondere Sicherheitslichtgitter dienen der Sicherheitstechnik, beispielsweise zur Absicherung von gefahrbringenden Maschinen, wie Gesenkbiegepressen, Stanzmaschinen, Schneidwerkzeugen, Schweißrobotern und dergleichen. Das Sicherheitslichtgitter schützt dabei vor unzulässigem Eindringen in Gefahrenbereiche, indem das durch das Sicherheitslichtgitter aufgespannte Schutzfeld auf Verletzung durch ein Objekt überwacht wird. Wird das Schutzfeld verletzt, gibt das Sicherheitslichtgitter ein entsprechendes Sicherheitsschaltsignal aus, das z. B. ein Abschaltsignal für die gefahrbringende Maschine sein kann. Derartige Lichtgitter als Sicherheitssensoren müssen zuverlässig arbeiten und deshalb hohe Sicherheitsanforderungen erfüllen, beispielsweise die Gerätenorm EN61496 für berührungslos wirkende Schutzeinrichtungen (BWS) und in der Applikation die Norm EN13849 für Maschinensicherheit.

Bei Lichtgittern für die Automatisierungstechnik wird ein Messfeld aus einzelnen Lichtschrankenmodulen des Lichtgitters gebildet, um beispielsweise eine Anzahl oder eine Abmessung von Werkstücken, die das Messfeld durchdringen, zu erfassen und zu kontrollieren. Sowohl Sicherheitslichtgitter als auch Lichtgitter für die Automatisierungstechnik werden von der Anmelderin in breiter Vielfalt angeboten.

Die Lichtgitter bestehen in der Regel aus zwei optoelektronischen Einheiten, wobei in der einen Einheit eine Reihe Lichtsender und in der anderen eine entsprechende Reihe Lichtempfänger angeordnet sind, so dass einzelne Lichtsender und Lichtempfänger sich paarweise gegenüberliegen und zwischen sich das Schutzfeld oder Überwachungsfeld des Lichtgitters bilden. Bei Unterbrechung wenigstens eines Lichtstrahls, was durch einen Lichtempfänger detektiert wird, erfolgt die Ausgabe des Sicherheitsschaltsignals oder eines Objektfeststellungssignals.

An heutige Lichtgitter wird eine Reihe von Anforderungen gestellt. Die Lichtgitter sollen möglichst klein sein, um an einer Maschine nur wenig Bauraum zu beanspruchen. Sie sollen nicht störend wirken, aber trotzdem in einfacher Weise an der Maschine zu montieren sein. Trotz ihrer möglichst kleinen Ausdehnung sollen keine Abstriche an Funktion und Leistung, Reichweite bzw. Detektionsvermögen gemacht werden. Und eine der wohl wichtigsten Anforderung ist, dass es möglichst kostengünstig sein soll, also einfach herzustellen und einfach an einer Maschine zu montieren.

Hinzu kommt, dass für unterschiedliche Anwendungen eine Vielzahl von Varianten etwa mit unterschiedlicher Baulänge, unterschiedlicher Strahlanzahl oder unterschiedlichem Strahlabstand bereitgestellt werden müssen. Deshalb wird häufig ein modularer Aufbau gewählt, bei dem jeweils Gruppen mit einer kleineren Anzahl von Einzelstrahlen in einem Modul zusammengefasst sind. Die Lichtgitterlänge kann dabei zwischen wenigen Zentimetern und mehreren Metern variieren.

Des Weiteren sollen die Lichtgitter in rauen Umgebungen einsetzbar sein, in denen beispielsweise Schweißarbeiten durch Schweißroboter durchgeführt werden oder Späne durch Bohr-, Fräsarbeiten oder andere Bearbeitungsverfahren entstehen. Dadurch wird das Lichtgitter selbst und insbesondere eine Frontscheibe des Lichtgitters, welche als Lichteintritts- und Lichtaustrittsfläche des Sensors dient, einem Funkenflug oder Spänen ausgesetzt, welche die Frontscheibe beschädigen können. Die Frontscheibe ist üblicherweise aus Kunststoff gefertigt und fest mit dem Lichtgittergehäuse verbunden. Die heißen Schweißfunken oder Späne beschädigen die Oberfläche der Frontscheibe, so dass die optischen Eigenschaften der Frontscheibe beeinträchtigt werden.

Die DE 20 2005 003 051 U1 offenbart eine optoelektronische Sensoreinrichtung, insbesondere Lichtschranken oder Lichtgitter, zur Erfassung eines Objektes mit einem oder mehreren Lichtsendern auf einer Seite einer Überwachungsstrecke und einem oder mehreren, mit dem Lichtsender korrespondierenden Lichtempfänger auf der anderen Seite der Überwachungsstrecke, wobei der/die Lichtsender ein Lichtbündel mit einem Sendekegelwinkel in die Überwachungsstrecke aussendet und der/die Lichtempfänger das Lichtbündel innerhalb eines Empfangskegelwinkels aufnimmt, in eine elektrische Größe wandelt und einer Auswerteschaltung zuführt, die im Falle des Vorhandenseins eines Objektes in der Überwachungsstrecke ein Erkennungssignal abgibt, wobei der Sendekegelwinkel des ausgesandten Lichtbündels und/oder der Empfangskegelwinkel des Lichtempfängers mit einer Vorsatzoptik, die am Lichtsender und/oder am Lichtempfänger zusätzlich aufgebracht werden können, veränderbar ist.

Die JP 2009 15951 A offenbart ein wasserdichtes Kameragehäuse.

Die US 2008/253756 A1 offenbart ein wasserdichtes Gehäuse für ein optisches Instrument.

Die US 2010/067898 A1 offenbart ein Kameragehäuse zum Schutz der Kamera vor Umgebungseinflüssen.

Die US 5095327 A offenbart ein Gehäuse für Kameralinsen für eine Kamera.

Die US 6 507 700 B1 offenbart eine wasserdichte Kamera mit einem wasserdichten Gehäuse.

Die DE 20 2005 003051 offenbart eine optoelektronische Sensoreinrichtung mit einer Vorsatzoptik.

Die US 5 851 631 A offenbart eine transparente Verbundinfrarotscheibe.

Die EP 1 396 734 A2 offenbart einen optischen Sensor mit einem Fenster aus zwei übereinanderliegenden transparenten Scheiben.

Aufgabe der vorliegenden Erfindung ist es, einen Sensor bereitzustellen, dessen Frontscheibe vor mechanischen Beschädigungen oder vor Verschmutzungen geschützt wird.

Die Aufgabe wird gelöst mit einem Lichtgitter gemäß Anspruch 1.

Unter lichtdurchlässig ist gemeint, dass die Frontscheibe bzw. die äußere Frontscheibe für sichtbares und/oder infrarotes Licht durchlässig bzw. transparent ist. Es kann auch vorgesehen sein, dass die Frontscheibe bzw. die äußere Frontscheibe beispielsweise nur für rotes Licht durchlässig ist.

Durch die äußere Frontscheibe, bzw. Zusatzfrontscheibe ist die Frontscheibe geschützt. Die äußere Frontscheibe schützt beispielsweise vor Schmutz, Funkenflug oder sonstigen mechanischen Einwirkungen und mechanischen Belastungen wie beispielsweise auf den Sensor treffende umherfliegende Fräs- oder Bohrspäne, welche die Frontscheibe verkratzen können. Die Frontscheibe wird weiter vor Reinigungsmitteln oder Kühlmitteln, wie beispielsweise Bohremulsionen geschützt.

Falls die äußere Frontscheibe selbst Beschädigungen aufweist, durch die oben genannten Einflüsse, kann die äußere Frontscheibe einfach ausgetauscht werden und durch eine neue äußere Frontscheibe ersetzt werden. Dabei muss der Sensor nicht von einer Halterung abgenommen werden. Die äußere Frontscheibe kann einfach von Vorne an dem Lichtgitter befestigt werden. Die äußere Frontscheibe kann einfach von Wartungspersonal ausgetauscht werden. Es ist kein besonderer Kundendienst notwendig. Durch den Austausch der äußeren Frontscheibe wird eine Standzeit, in der eine Anlage außer Betrieb gesetzt werden muss, auf ein Minimum reduziert. Die äußeren Frontscheiben können einfach vor Ort zur Verfügung gestellt werden. Beispielsweise kann die äußere Frontscheibe durch Ölnebel nach und nach belegt werden, welcher nur schlecht entfernt werden kann oder die äußere Frontscheibe wird gar bei einem Reinigungsprozess beschädigt. In diesen Fällen kann die äußere Frontscheibe einfach ausgetauscht werden.

Die äußere Frontscheibe ist sehr preiswert herstellbar und kann deshalb auch häufig ausgetauscht werden, ohne dass nennenswerte Mehrkosten entstehen. Die äußere Frontscheibe ist demnach ein preiswertes Einwegteil, das nach einem Verschleiß einfach ausgetauscht werden kann.

Weiter ist zwischen der Frontscheibe und der äußeren Frontscheibe eine ringförmige Dichtung angeordnet. Durch die ringförmige Dichtung ist zwischen der Frontscheibe und der äußeren Frontscheibe ein dichter Hohlraum gebildet. Durch die ringförmige Dichtung ist gewährleistet, dass zwischen die Frontscheibe und der äußeren Frontscheibe keine Verunreinigungen eintreten können. Dadurch ist gewährleistet, dass die optischen Eigenschaften des Sensors nicht beeinträchtigt werden.

Gemäß der Erfindung ist die ringförmige Dichtung fest mit der äußeren Frontscheibe verbunden. Die Dichtung ist beispielsweise auf die äußere Frontscheibe aufdispensiert. Bei der Dichtung kann es sich um eine Klebemasse handeln, die auf die äußere Frontscheibe aufgetragen wird und dann zu einer elastischen Dichtung trocknet, die fest mit der äußeren Frontscheibe verbunden ist. Dadurch ist gewährleistet, dass die Dichtung beim Austausch der äußeren Frontscheibe an dieser haften bleibt und keine Rückstände an der Frontscheibe zurückbleiben. Falls die Dichtung auch beschädigt ist, wird dadurch die Dichtung automatisch mit ausgetauscht. Dadurch kann die äußere Frontscheibe zusammen mit der Dichtung in einem Arbeitsgang ausgetauscht werden.

Gemäß der Erfindung weist die äußere Frontscheibe eine Klippleiste auf, welche in das Gehäuse des Sensors eingreift. Die Klippleiste ist dabei insbesondere an jeweils gegenüberliegenden Rändern der äußeren Frontscheibe angeordnet. An dem Gehäuse des Sensors sind jeweils zwei Nuten vorgesehen, in die die Klippleisten jeweils einrasten können. Durch die Klippleisten kann die äußere Frontscheibe ohne Werkzeug und ohne zusätzliche Montagemittel an dem Sensor befestigt werden.

Gemäß der Erfindung weist die äußere Frontscheibe eine Griffleiste auf zum Entfernen der äußeren Frontscheibe. Durch die Griffleiste kann die äußere Frontscheibe einfach mit der Hand gegriffen werden, um diese von dem Sensor zu lösen. Dadurch entfällt die Verwendung von Werkzeug. Die Griffleiste ist vorzugsweise parallel zur Klippleiste angeordnet und befindet sich ebenfalls vorzugsweise am Rand der äußeren Frontscheibe.

In einer besonderen Ausführungsform bildet die äußere Frontscheibe und das Gehäuse ebene Übergangsflächen. Durch die Vermeidung von Kanten, Ecken und Spalten wird das Verschmutzen des Sensors verhindert. Durch die ebenen Übergangsflächen können sich insbesondere keine Bohr- oder Frässpäne an dem Sensor verklemmen oder absetzen. Auch wird die Reinigung des Sensors durch die ebenen Übergangsflächen vereinfacht.

Gemäß der Erfindung ist der Sensor als Lichtgitter ausgebildet. Lichtgitter werden beispielsweise bei Messaufgaben, beispielsweise in Bearbeitungsmaschinen, beispielsweise bei der Herstellung von Frästeilen- oder gebohrten Teilen eingesetzt, wobei eine hohe mechanische Beanspruchung durch umherfliegende Späne erfolgt. Weiter werden Lichtgitter beispielsweise bei der Fertigung von Karosserien im Automobilbau eingesetzt, um Bereiche, in denen Schweißroboter agieren, abzusichern. Da ein Austausch von Lichtgittern, beispielsweise in derartigen Fertigungsstraßen aufwendig ist, wird das Lichtgitter mit der äußeren Frontscheibe versehen, um die Frontscheibe des Lichtgitters vor Beschädigungen zu schützen.

Weiter bevorzugt ist der Sensor als Sicherheitslichtgitter ausgebildet. Sicherheitslichtgitter werden in den oben genannten Anwendungen zum Personenschutz eingesetzt. Die Sicherheitslichtgitter sind in diesen Anwendungen auch extremen mechanischen Beanspruchungen ausgesetzt, so dass die äußere Frontscheibe das Sicherheitslichtgitter schützt und dessen Austausch vermeidet, da nur die äußere Frontscheibe bei einer Beschädigung ausgetauscht werden muss.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
Figur 1 ein Lichtgitter;
Figur 2 in erfindungsgemäßes Lichtgitter mit einer äußeren Frontscheibe;
Figur 3 eine äußere Frontscheibe in einer Detailansicht;
Figur 4 eine äußere Frontscheibe in einer Querschnittsansicht;
Figur 5 ein erfindungsgemäßes Lichtgitter mit separater äußerer Frontscheibe;
Figur 6 ein erfindungsgemäßes Lichtgitter mit angeordneter äußerer Frontscheibe;
Figur 7 eine Detailansicht eines erfindungsgemäßen Lichtgitters;
Figur 8 ein erfindungsgemäßes Lichtgitter.

In den nachfolgenden Figuren sind identische Teile mit identischen Bezugszeichen versehen.

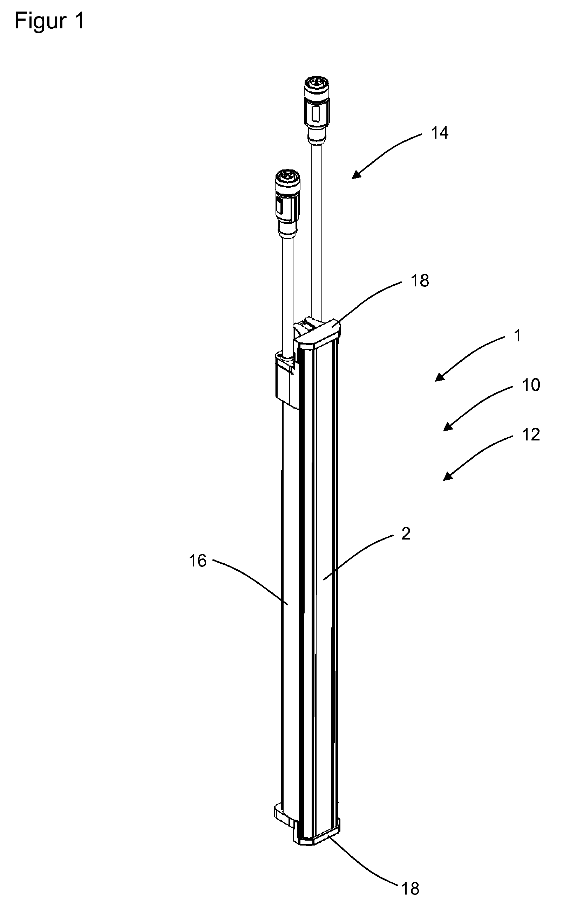

Figur 1 zeigt einen Sensor 1, nämlich ein Lichtgitter 10. Bei dem Lichtgitter 10 kann es sich um ein Sicherheitslichtgitter 12 für den Unfallschutz oder ein Lichtgitter 10 für die Automatisierungstechnik oder um einen beliebig anderen Sensor handeln. Der Begriff Sensor ist breit auszulegen und umfasst alle Arten von Sensoren. Beispielsweise kann es sich bei dem Sensor um einen Zeilensensor, einen Kontrastsensor, einen Kontrasttaster, eine Lichtschranke, einen Lichttaster, eine Kamera, um ein Vision System, bzw. Kamera System oder eine andere Art von Sensor handeln. Für gewöhnlich bestehen Lichtgitter 10 aus einem Lichtgittersender und einem Lichtgitterempfänger, die sich gegenüberstehen, wobei zwischen dem Sender und dem Empfänger ein Schutzfeld oder ein Überwachungsfeld gebildet wird, welches durch eine Vielzahl von aneinandergereihten Lichtschranken gebildet wird. Figur 1 zeigt beispielsweise einen Lichtgittersender oder Lichtgitterempfänger. Wird das Schutzfeld des Lichtgitters 10 unterbrochen, wird ein Objektfeststellungssignal über einen elektrischen Anschluss 14 abgegeben, um eine Maschine zu stoppen, um so beispielsweise eine Person, die die Unterbrechung des Schutzfeldes herbeigeführt hat, zu schützen.

Bei Lichtgittern 10 für die Automatisierungstechnik wird ein Überwachungsfeld bzw. ein Messfeld aus einzelnen Lichtschranken des Lichtgitters 10 gebildet, um beispielsweise eine Anzahl oder eine Abmessung von Werkstücken, beispielsweise Bohrern, die das Messfeld durchdringen, zu erfassen und zu kontrollieren.

Das Lichtgitter 10 weist eine Sendeeinheit mit mehreren Lichtsendern, z. B. LEDs, sowie eine Empfangseinheit mit mehreren, jeweils einem Lichtsender zugeordneten Lichtempfängern, z. B. Photodioden, auf. Zwischen jedem Lichtsender 14 und dem jeweils zugeordneten Lichtempfänger besteht ein Lichtpfad, über den der Lichtempfänger, zumindest in Abwesenheit eines Objekts, in dem zwischen den Lichtsendern 14 und den Lichtempfängern vorhandenen Überwachungsbereich ein von dem jeweiligen Lichtsender gesendetes Lichtsignal empfangen kann. Somit bilden Lichtsender und Lichtempfänger paarweise einzelne, parallel zueinander ausgerichtete Lichtschranken. Die optischen Achsen der Lichtpfade werden durch jeweils den Lichtsendern und den Lichtempfängern zugeordnete Optikmodule definiert. Die Gehäuse der Sendeeinheit und der Empfangseinheit sind mit einem Frontfenster bzw. einer lichtdurchlässigen Frontscheibe 2 abgeschlossen, durch die die Lichtpfade hindurchtreten.

In der Sendeeinheit müssen nicht ausschließlich Lichtsender und in der Empfängereinheit nicht ausschließlich Lichtempfänger vorgesehen sein. Es ist auch denkbar, dass einige Lichtempfänger in der Sendeeinheit und die entsprechenden Lichtsender dann in der Empfängereinheit angeordnet sind. Weitere Ausführungsformen der Lichtgittereinheiten sind denkbar, z. B. können alle Sender und Empfänger in einer Einheit angeordnet sein und auf der gegenüberliegenden Seite kann dann ein Reflektor angeordnet sein. Der Einfachheit halber sei aber im Folgenden von einem Lichtgitter mit der beschriebenen Sendeeinheit und der Empfangseinheit ausgegangen, da es auf die Details von Sende- und Empfängereinheit nicht ankommt.

In bekannter Weise weist das Lichtgitter 10 eine nicht näher dargestellte Steuereinrichtung zur Ansteuerung der Lichtsender und eine Auswerteeinheit zur Auswertung der von den Lichtempfängern gelieferten Empfangssignale auf. Die Auswerteeinheit umfasst üblicherweise eine Erkennungseinheit zur Erkennung eines Objekteingriffs in den Überwachungsbereich und zur Ausgabe eines Objektfeststellungssignals an einem Ausgang.

Die Gehäuse 16 von Sendeeinheit und die Empfangseinheit sind im Regelfall gleichartig als längliche Aluminiumgehäuse ausgebildet. Jedoch ist es auch möglich, das Lichtgittergehäuse selbst aus Kunststoff auszuführen. Die Gehäuse 16 sind an geeigneter Stelle an einer Befestigungsfläche einer Maschine, die mit dem Lichtgitter 10 ausgerüstet werden soll, mittels einer Halterung festlegbar.

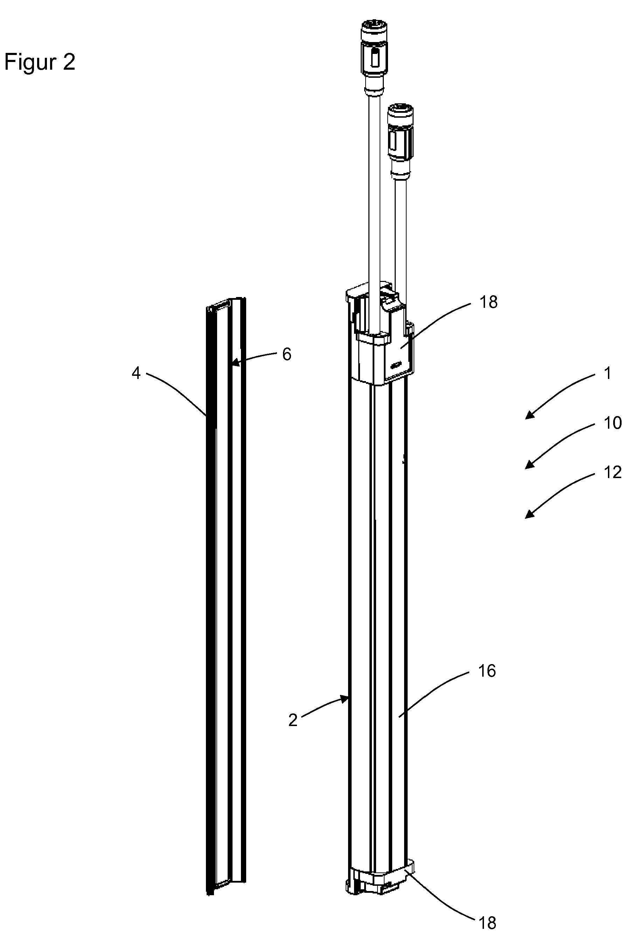

Figur 2 zeigt die äußere Frontscheibe 4 für den Sensor 1. Diese äußere Frontscheibe 4 schützt die Frontscheibe 2 vor Beschädigungen, insbesondere bei Schweißfunkenflug oder bei umher fliegenden Teilen wie beispielsweise Bohr- oder Frässpänen. Die äußere Frontscheibe 4 ist beispielsweise aus lichtdurchlässigem oder infrarotdurchlässigem Kunststoff hergestellt. Vorzugsweise weist die äußere Frontscheibe 4 eine Dicke von mindestens 0,5 mm auf. Eine maximale Dicke hängt von der Beanspruchung der äußeren Frontscheibe 4 ab und kann mehrere Millimeter betragen. Die äußere Frontscheibe 4 ist austauschbar an dem Sensor 1 angeordnet. Hierzu wird die bisherige äußere Frontscheibe 4 von dem Sensor 1 entfernt. Hierbei bleibt eine Dichtung 6 an der äußeren Frontscheibe 4 haften. Durch die Frontscheibe 2 und die äußere Frontscheibe 4 wird eine Doppelfrontscheibe oder ein Doppelfrontscheibensystem gebildet.

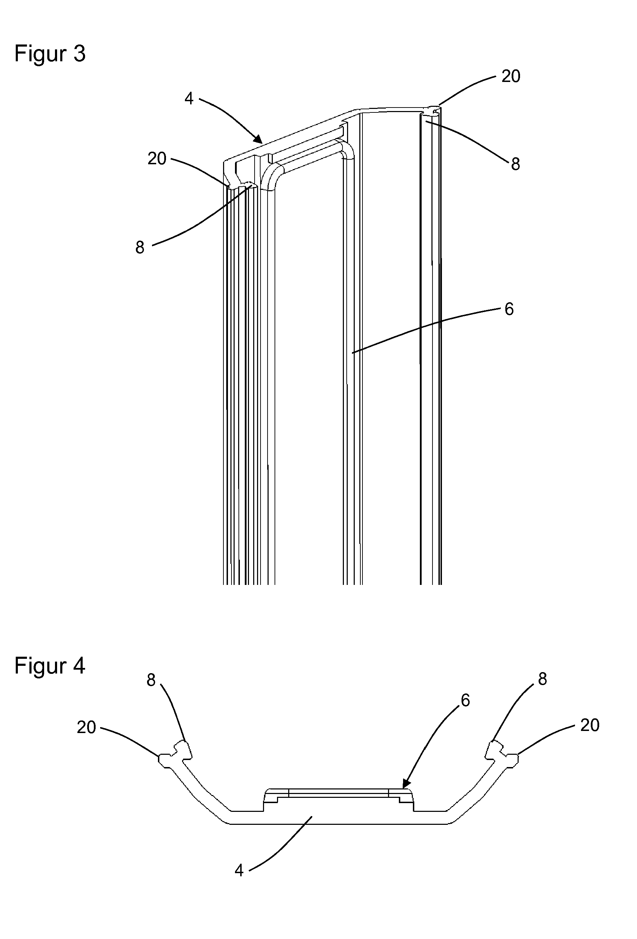

Figur 3 zeigt die äußere Frontscheibe 4 in einer perspektivischen Detailansicht. Die äußere Frontscheibe 4 hat in diesem Beispiel einen U-förmigen Querschnitt. Jedoch kann die äußere Frontscheibe 4 auch eine andere Querschnittsform aufweisen. An den jeweiligen Längsseiten weist die äußere Frontscheibe 4 jeweils eine Klippleiste 8 auf, die in jeweils eine Nut des Gehäuses des Sensors eingreifen kann. Durch die Klippleiste 8 wird die äußere Frontscheibe 4 in dem Gehäuse des Sensors befestigt. Weiter weist die äußere Frontscheibe 4 in diesem Beispiel an den jeweiligen Längsseiten jeweils eine Griffleiste 20 auf. Die Griffleiste 20 steht leicht hervor, so dass diese mit der bloßen Hand greifbar ist, so dass die äußere Frontscheibe 4 von dem Sensor getrennt werden kann und einfach entfernt werden kann.

Weiter weist die äußere Frontscheibe 4 eine Dichtung 6, insbesondere eine ringförmige Dichtung 6, auf. Die Dichtung 6 wird beispielsweise auf die äußere Frontscheibe 4 aufdispensiert. Die Dichtung 6 besteht aus einer Klebemasse, welche auf die äußere Frontscheibe 4 aufgespritzt wird. Die Klebemasse trocknet dann zu einer elastischen Dichtung 6 welche fest mit der äußeren Frontscheibe 4 verbunden ist. Die Dichtung 6 bildet dann einen Wulst der von der äußeren Frontscheibe 4 absteht.

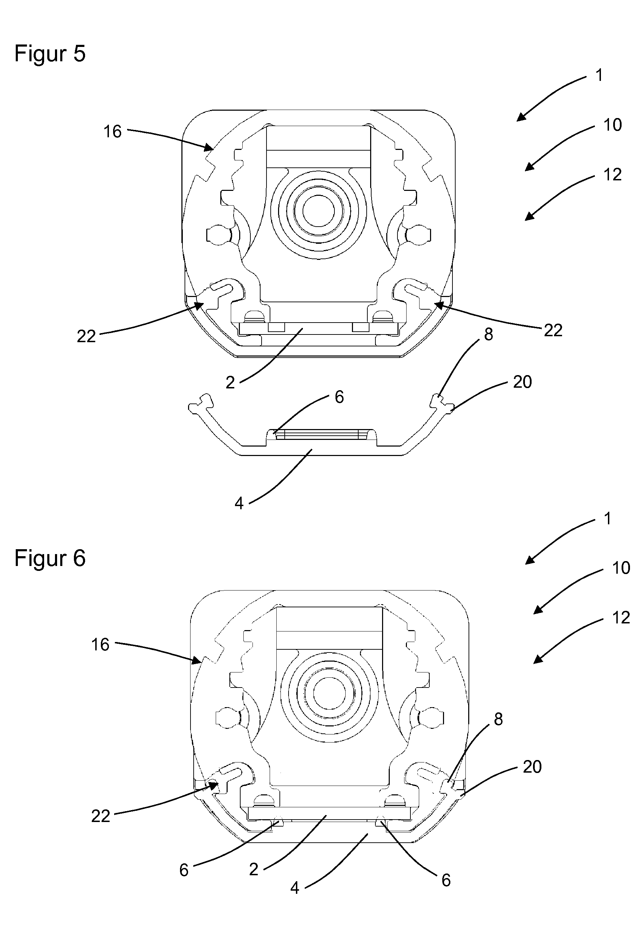

Figur 4 zeigt die äußere Frontscheibe 4 in einer Querschnittsansicht. Dabei sind jeweils ausgebildete Klippleisten 8 und Griffleisten 20 einstückig mit der äußeren Frontscheibe 4 verbunden. Die äußere Frontscheibe 4 wird beispielsweise als Strangpressprofil hergestellt. Die Dichtung 6 steht von der Oberfläche der äußeren Frontscheibe 4 hervor. Fig. 5 zeigt ein erfindungsgemäßes Lichtgitter 10 mit Gehäuse 16 im Querschnitt mit der lichtdurchlässigen Frontscheibe 2 und der noch nicht angeordneten lichtdurchlässigen äußeren Frontscheibe 4. Beispielsweise drücken Fixierleisten 22 die Frontscheibe 2 gegen eine Gehäusedichtung. Der Gehäusequerschnitt des Sensors 1 bzw. Lichtgitters 10 kann verschiedene Formen aufweisen, beispielsweise kreisförmig, quadratisch oder rechteckförmig. In dem Gehäuse 16 sind gegenüberliegend zwei Nuten 22 vorgesehen. Die äußere Frontscheibe 4 weist die ringförmig umlaufende Dichtung 6 auf, die fest mit der äußeren Frontscheibe 4 verbunden ist.

Figur 6 zeigt ein erfindungsgemäßes Lichtgitter 10 mit angeordneter äußerer Frontscheibe 4. Dabei greifen die zwei am Rand der äußeren Frontscheibe vorgesehenen Klippleisten 8 jeweils in eine Nut 22 des Gehäuses 16. Durch die Klippleisten 8 wird die äußere Frontscheibe 4 in den Nuten 22 fixiert, indem diese in die Nuten 22 einrasten. Die Dichtung 6 der äußeren Frontscheibe 4 wird nun gegen die Frontscheibe 2 gepresst, so dass zwischen der Frontscheibe und der äußeren Frontscheibe 4 keine Verschmutzungen eintreten können. Weiter weist die äußere Frontscheibe 4 zwei Griffleisten 20 auf, die von der äußeren Frontscheibe 4 abstehen, so dass diese gut mit den Fingern erfasst werden können und die äußere Frontscheibe 4 einfach mit der bloßen Hand und ohne Werkzeug von dem Gehäuse 16 entfernt werden kann.

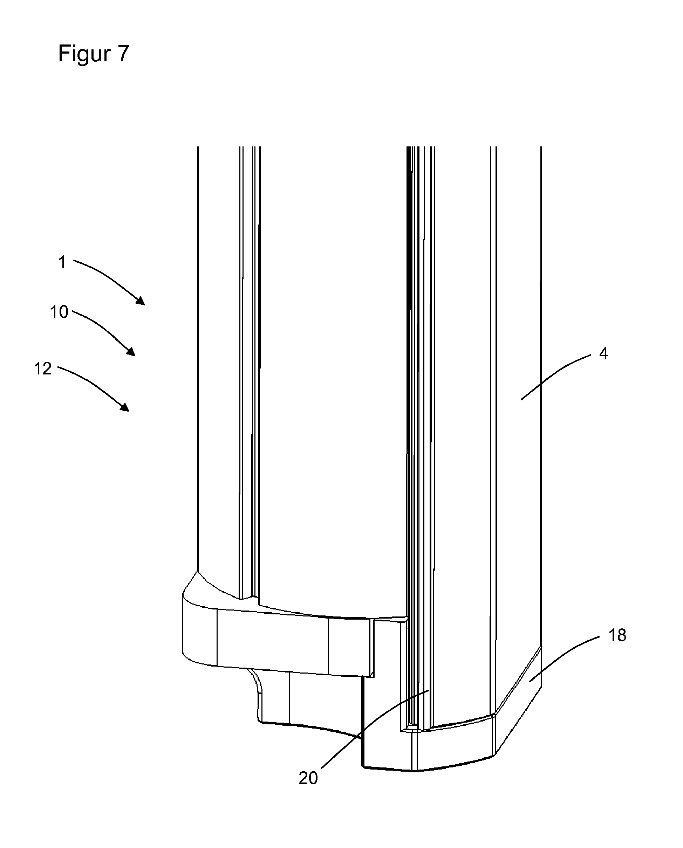

Figur 7 zeigt eine Detailansicht eines erfindungsgemäßen Lichtgitters 10 mit der äußeren Frontscheibe 4. In der Figur 7 ist ein Ende des Sensors 1 mit der äußeren Frontscheibe 4 dargestellt. Die äußere Frontscheibe 4 ist dabei bündig zu den Oberflächen der Endkappe 18 angeordnet, so dass ebene Übergangsflächen gebildet werden. Dadurch können an den Übergängen zur äußeren Frontscheibe 4 auch kaum Verschmutzungen ablagern. Durch die ebenen Übergangsflächen kann der Sensor 1 mit der äußeren Frontscheibe 4 auch einfacher gereinigt werden.

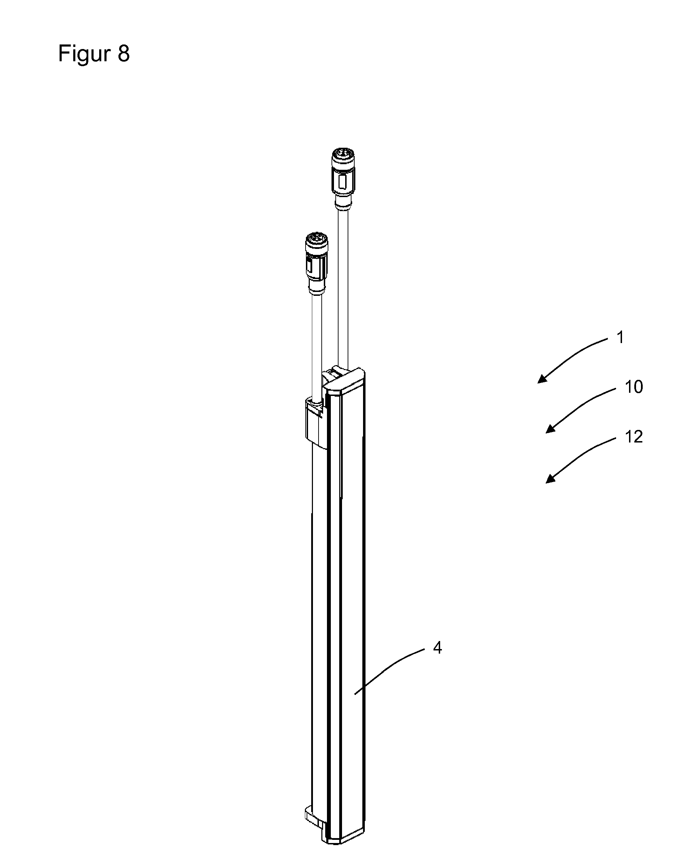

Figur 8 zeigt ein erfindungsgemäßes Lichtgitter mit einem Gehäuse 16 und einer Frontscheibe, wobei der Sensor 1 vor der Frontscheibe eine äußere Frontscheibe 4 aufweist, die austauschbar angeordnet ist.

### Bezugszeichen:

- 1: Sensor
- 2: Frontscheibe
- 4: Äußere Frontscheibe
- 6: Dichtung
- 8: Klippleiste
- 10: Lichtgitter
- 12: Sicherheitslichtgitter
- 14: elektrischer Anschluss
- 16: Gehäuse
- 18: Endkappe
- 20: Griffleiste
- 22: Nut

## Patentansprüche

1. Lichtgitter (10) mit einem Gehäuse (16) und einer lichtdurchlässigen Frontscheibe (2), wobei das Lichtgitter (10) vor der Frontscheibe (2) eine lichtdurchlässige äußere Frontscheibe (4) aufweist, die austauschbar angeordnet ist, so dass eine Doppelfrontscheibe gebildet ist und zwischen der Frontscheibe (2) und der äußeren Frontscheibe (4) eine ringförmige Dichtung (6) angeordnet ist, wobei die Dichtung fest mit der äußeren Frontscheibe verbunden ist, wobei durch die ringförmige Dichtung zwischen der Frontscheibe und der äußeren Frontscheibe ein dichter Hohlraum gebildet ist, wobei an dem Gehäuse gegenüberliegend zwei Nuten vorgesehen sind, wobei die äußere Frontscheibe (4) an den jeweiligen Längsseiten jeweils eine Klippleiste aufweist, welche in jeweils eine Nut des Gehäuses (16) des Lichtgitters (10) eingreift und die äußere Frontscheibe (4) an den jeweiligen Längsseiten jeweils eine Griffleiste (20) aufweist, welche jeweils von der äußeren Frontscheibe hervorsteht zum einfachen Entfernen der äußeren Frontscheibe (4).

2. Lichtgitter (10) nach Anspruch 1, **dadurch gekennzeichnet, dass** die äußere Frontscheibe (4) und das Gehäuse (16) ebene Übergangsflächen bilden.

3. Lichtgitter (10) nach einem der vorhergehenden Ansprüche, **dadurch gekennzeichnet, dass** dieses als Sicherheitslichtgitter (12) ausgebildet ist.

## Claims

1. A light grid (10) having a housing (16) and a light-permeable front screen (2),
wherein the light grid (10) has a light permeable outer front screen (4) before the front screen (2), said outer front screen being arranged replaceably, such that a double front screen is formed and a ring-shaped seal (6) is arranged between the front screen (2) and the outer front screen (4), with the seal (6) being fixedly connected to the outer front screen, with a sealed hollow space being formed by the ring-shaped seal between the front screen and the outer front screen, with two grooves being provided oppositely disposed at the housing, with the outer front screen (4) having a respective tilter at the respective longitudinal sides which engages into a respective groove of the housing (16) of the light grid (10) and with the outer front screen (4) having a respective grip rail (20) at the respective longitudinal sides which respectively projects from the outer front screen for a simple removal of the outer front screen (4).

2. A light grid (10) in accordance with claim 1,
**characterized in that**
the outer front screen (4) and the housing (16) form planar transition surfaces.

3. A light grid (10) in accordance with one of the preceding claims,
**characterized in that**
it is configured as a safety light grid (12).

## Revendications

1. Grille lumineuse (10) comportant un boîtier (16) et une vitre frontale (2) translucide,
la grille lumineuse (10) présentant devant la vitre frontale (2) une vitre frontale extérieure (4) translucide qui est agencée de manière interchangeable, de telle sorte qu'il est formé une double vitre frontale et qu'un joint d'étanchéité (6) annulaire est agencé entre la vitre frontale (2) et la vitre frontale extérieure (4), le joint d'étanchéité étant relié de manière solidaire à la vitre frontale extérieure, une cavité étanche étant formée par le joint d'étanchéité annulaire entre la vitre frontale et la vitre frontale extérieure, deux gorges opposées étant prévues sur le boîtier, la vitre frontale extérieure (4) présentant sur les grands côtés respectifs une baguette clipsée qui s'engage respectivement dans une gorge du boîtier (16) de la grille lumineuse (10) et la vitre frontale extérieure (4) présentant sur les grands côtés respectifs une baguette de préhension (230) qui fait saillie depuis la vitre frontale extérieure respective pour enlever simplement la vitre frontale extérieure (4).

2. Grille lumineuse (10) selon la revendication 1, **caractérisée en ce que** la vitre frontale extérieure (4) et le boîtier (16) forment des surfaces de transition planes.

3. Grille lumineuse (10) selon l'une des revendications précédentes, **caractérisée en ce que** celle-ci est réalisée en tant que grille lumineuse de sécurité (12).
